# EUROPEAN PATENT APPLICATION

(11) **EP 2 387 142 A1**
(43) Date of publication of application: **16.11.2011**
(21) Application number: 10827217.0
(22) Date of filing: 26.08.2010
(51) Int. Cl.: H02M 7/10

(54) **COMBINED RECTIFIER**

(30) Priority: 02.11.2009 RU 2009140521
(71) Applicant: Stepanov, Arkady Anatolievich, Orsk, Orenburgskaya obl. 462420 (RU); Kozhemyakin, Yury Alexandrovich, Novotroitsk, Orenburgskaya obl. 462353 (RU); Khoryakov, Vladimir Vladimirovich, Orsk, Orenburgskaya obl. 462429 (RU); Gorozhanov, Maxim Alexandrovich, Orsk, Orenburgskaya obl. 462411 (RU); Savin, Vladimir Valerievich, Orsk, Orenburgskaya obl. 462404 (RU); Zuev, Alexandr Vladimirovich, Orsk, Orenburgskaya obl. 462428 (RU); Berezhnoi, Viktor Yurievich, Orenburgskaya obl. 462429 (RU)
(72) Inventor: The designation of the inventor has not yet been filed
(74) Representative: Bucher, Ralf Christian
(86) International application number: PCT/RU2010/000468
(87) International publication number: WO 2011/053188

(57) **Abstract**

The invention relates to the field of electrical engineering and is intended in particular for converting an AC voltage and an alternating current into a DC voltage and a direct current. The combined rectifier comprises: a matching power transformer and a step-up power transformer, the primary windings of said transformers being connected in series with one another and with an AC voltage source, and the secondary windings being connected in series with diode bridges, wherein the positive terminal of the diode bridge of the matching transformer is connected to the negative terminal of the diode bridge of the step-up transformer; and a load, which is connected to the negative terminal of the diode bridge of the matching transformer and the positive terminal of the diode bridge of the step-up transformer. The combined rectifier additionally comprises a half-wave rectifier and capacitors, wherein the half-wave rectifier is in the form of a diode and is connected in series with an AC voltage source and the primary winding of the matching transformer, and each capacitor is connected to the diode bridge of the corresponding transformer. When implementing the claimed invention it is possible to achieve the technical result of reducing losses during conversion of an AC voltage and an alternating current into a DC voltage and a direct current.

## Description

### Technical Field

The invention relates to electrical engineering and is intended, in particular, for converting alternating voltage and current into direct voltage and current.

### Background Art

A prior art rectifier comprises a diode connected in series to a load and choke coil and two capacitors, one of which is connected directly in parallel to the load and the other is connected thereto through the choke coil (Encyclopedic Dictionary for the Young Technician, Pedagogika, Moscow, 1988, pp. 75-76).

The prior art rectifier is disadvantageous because of its low efficiencies and small ratios of rectified to alternating voltage.

The high-voltage transformer rectifier disclosed in GB Application No. 2,045,012 A published on October 22, 1980 is the closest related prior art of the claimed invention from the viewpoint of its combination of essential features. The prior art transformer comprises a matching and a step-up power transformers having primary windings connected in series to one another and to an alternating voltage source, and secondary windings that are connected to diode bridges, the positive terminal of the diode bridge of the matching transformer being connected to the negative terminal of the diode bridge of the step-up transformers, and a load that is connected to the negative terminal of the diode bridge of the matching transformer and to the positive terminal of the diode bridge of the step-up transformer.

The closest prior art invention is disadvantageous because of high losses caused as alternating voltage and current are converted into direct voltage and current.

### Disclosure of Invention

Reduction in losses caused by conversion of alternating voltage and current into direct voltage and current is the technical effect achieved by the claimed invention.

This technical effect is achieved in a combination rectifier comprising a matching and a step-up power transformers that have primary windings connected in series to one another and to an alternating current source and secondary windings connected to diode bridges such that the positive terminal of the diode bridge of the matching transformer is connected to the negative terminal of the diode bridge of the step-up transformers, and a load that is connected to the negative terminal of the diode bridge of the matching transformer and to the positive terminal of the diode bridge of the step-up transformer, said combination rectifier further comprising a half-wave rectifier and capacitors, the half-wave rectifier being a diode connected in series to the alternating voltage source and to the primary winding of the matching transformer, and each capacitor being connected to the diode bridge of a respective transformer.

The filterless half-wave rectifier cuts off the negative half-wave and has a pulsating voltage rising in magnitude from zero to maximum and back to zero at the output thereof. This voltage causes current varying similarly in magnitude over time to flow in the circuit of the transformer windings. Besides, the second half-wave cut off by the diode is restored by the electromotive force induced in the transformer windings.

As a result of the filterless half-wave rectifier connected to the primary windings of the transformer that are in series to one another and to an alternating voltage source being used in the present invention, the primary windings of the transformer are supplied with pulsating voltage varying in magnitude over time, said pulsating voltage causing an electromotive force to be induced to maintain regular operation of the transformer.

### Brief Description of Drawings

The invention is illustrated in the accompanying drawings wherein:

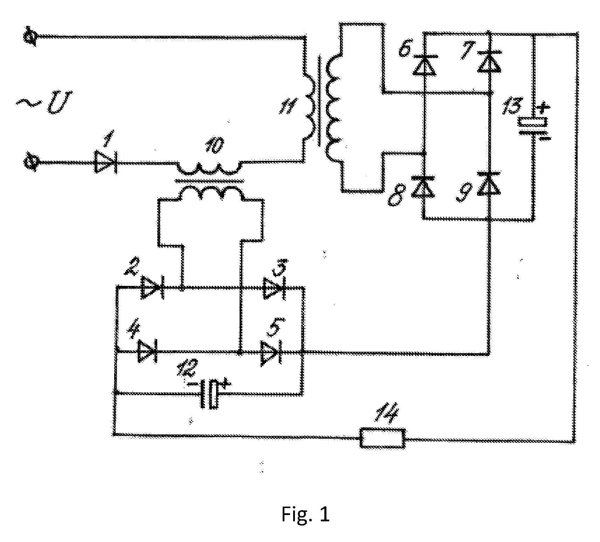

FIG. 1 is an electrical circuit diagram of the combination rectifier; and
FIG. 2 illustrates waveforms of currents, voltage, and EMF in different parts of the combination rectifier circuit.

### Best Mode for Carrying out the Invention

The combination rectifier of this invention comprises a half-wave rectifier 1 such as a diode, diodes 2, 3, 4, 5, 6, 7, 8, and 9, a matching power transformer 10, a step-up power transformer 11, capacitors 12 and 13, and a load 14.

Half-wave rectifier 1 and the primary windings of transformers 10 and 11 are connected in series to one another and to an alternating voltage source, a diode bridge consisting of diodes 2, 3, 4, and 5 is connected to the secondary winding of transformer 10 and capacitor 12, and a diode bridge consisting of diodes 6, 7, 8, and 9 is connected to the secondary winding of transformer 11 and capacitor 13. The positive terminal of the diode bridge of diodes 2, 3, 4, and 5 and capacitor 12 is connected to the negative terminal of the diode bridge of diodes 6, 7, 8, and 9 and capacitor 13, and load 14 is connected to the negative terminal of the diode bridge of diodes 2, 3, 4, and 5 and capacitor 12 and to the positive terminal of the diode bridge of diodes 6, 7, 8, and 9 and capacitor 13.

The combination rectifier operates as follows: Half-wave rectifier 1, which is a diode, rectifies the half-wave of the input alternating voltage and current. The rectified pulsating current flowing in the primary windings of transformers 10 and 11 induces a variable magnetic flux in the transformer cores, as a result of which an alternating EMF is induced at the input voltage frequency in the windings of these transformers. Next, the full-wave bridge rectifier of diodes 2, 3, 4, and 5 connected to the secondary winding of transformer 10 and the full-wave bridge rectifier of diodes 6, 7, 8, and 9 connected to the secondary winding of transformer 11 rectify the alternating EMFs of these transformers and filter them in capacitor 12 connected to the diode bridge of diodes 2, 3, 4, and 5 and capacitor 13 connected to the diode bridge of diodes 6, 7, 8, and 9. As a result of the two bridge rectifiers and load being connected in series, the voltage across the load is formed by the voltages of these two rectifiers.

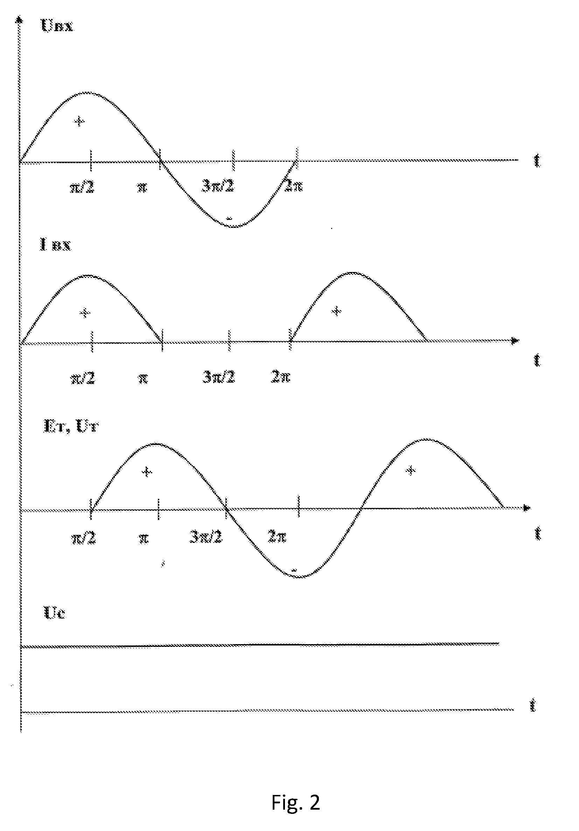

The waveforms given in FIG. 2 explain the physical processes developing in different parts of the circuit. The waveforms show input alternating voltage Uᵢₙ, current Iᵢₙ flowing through half-wave rectifier 1, the EMF induced in the transformers, and voltages Eₜ and Uₜ in the windings of the transformers, and also filtered voltage U_{c}.

## Claims

1. A combination rectifier comprising a matching and a step-up power transformers having primary windings that are connected in series to one another and to an alternating voltage source, and secondary windings connected to diode bridges, the positive terminal of the diode bridge of the matching transformer being connected to the negative terminal of the diode bridge of the step-up transformer, and a load connected to the negative terminal of the diode bridge of the matching transformer and to the positive terminal of the diode bridge of the step-up transformer, wherein the combination rectifier further comprises a half-wave rectifier and capacitors, the half-wave rectifier being a diode connected in series to an alternating voltage source and the primary winding of the matching transformer, each capacitor being connected to the diode bridge of a respective transformer.
